(19) Europäisches Patentamt
European Patent Office
Office européen des brevets

(11) **EP 4 560 911 A1**

(12) **EUROPÄISCHE PATENTANMELDUNG**

(43) Veröffentlichungstag:
**28.05.2025  Patentblatt 2025/22**

(21) Anmeldenummer: 23212003.0

(22) Anmeldetag: **24.11.2023**

(51) Internationale Patentklassifikation (IPC):
**H02M 7/483** (2007.01)    **H02M 1/32** (2007.01)
**H02M 7/757** (2006.01)    **H02P 3/22** (2006.01)
**H02H 9/04** (2006.01)

(52) Gemeinsame Patentklassifikation (CPC):
**H02M 1/322; H02M 7/4835;** H02H 9/041;
H02M 1/0095; H02M 7/7575; H02P 3/22

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **Innomotics GmbH**
**90441 Nürnberg (DE)**

(72) Erfinder: **Hofmann, Viktor**
**95448 Bayreuth (DE)**

(74) Vertreter: **Siemens Patent Attorneys**
**Postfach 22 16 34**
**80506 München (DE)**

(54) **FREQUENZVARIABLES STEUERVERFAHREN FÜR EINEN MODULAREN BREMSSTELLER**

(57)    Die Erfindung betrifft ein Verfahren zum Betreiben eines modularen Bremsstellers (1), wobei der modulare Bremssteller (1) mindestens ein Submodul (2) und einen Bremswiderstand (3) umfasst, die in einer Reihenschaltung (4) angeordnet sind. Zur Verbesserung des modularen Bremsstellers wird vorgeschlagen, dass mittels des mindestens einen Submoduls (2) eine Spannung ($u_{BR}$) erzeugt wird, wobei die erzeugte Spannung ($u_{BR}$) einen Gleichanteil ($u_{BR,DC}$) und einen alternierenden Anteil ($u_{BR,aDc}$) aufweist, wobei der alternierende Anteil ($u_{BR,aDc}$) derart bemessen ist, dass die im zeitlichen Mittel vom modularen Bremssteller (1) aufgenommene elektrische Energie im Bremswiderstand (3) in Wärme umgesetzt wird, wobei eine Modulationsfrequenz ($f_M$) des alternierende Anteils ($u_{BR,aDC}$) in Abhängigkeit von einem Teillastfaktor ($\alpha$) des modularen Bremsstellers (1) variiert wird. Ferner betrifft die Erfindung eine Steuereinrichtung (10), eingerichtet zur Durchführung eines derartigen Verfahrens. Die Erfindung betrifft weiter einen derartigen modularen Bremssteller (1) mit einer derartigen Steuereinrichtung, sowie eine modulare Antriebseinheit (20), aufweisend einen modularen Multilevel-Stromrichter (21) und einen modularen Bremssteller (1).

FIG  6

EP 4 560 911 A1

**Beschreibung**

Die Erfindung betrifft ein Verfahren zum Betreiben eines modularen Bremsstellers, wobei der modulare Bremssteller mindestens ein Submodul und einen Bremswiderstand umfasst, die in einer Reihenschaltung angeordnet sind. Weiter betrifft die Erfindung eine Steuereinrichtung sowie einen modularen Bremssteller, wobei der modulare Bremssteller mindestens ein Submodul und einen Bremswiderstand umfasst, die in einer Reihenschaltung angeordnet sind. Die Erfindung betrifft ferner eine modulare Antriebseinheit, aufweisend einen modularen Multilevel-Stromrichter und einen derartigen modularen Bremssteller, wobei der modulare Bremssteller mit einer Gleichspannungsseite des modularen Multilevel-Stromrichters elektrisch verbunden ist.

Ein modularer Multilevel-Stromrichter ist aus der DE 10 103 031 A1 bekannt. Dieser, auch als M2C oder MMC bekannte Stromrichter, besitzt eine Konverter-Topologie, die aufgrund des Aufbaus mit Submodulen insbesondere für Mittel- und Hochspannungsanwendungen geeignet ist. Der Grundaufbau des mehrphasigen Konverters umfasst zwei Konverterarme pro Phase, die jeweils eine Reihenschaltung von Submodulen aufweisen. Dabei sind die beiden Konverterarme am Phasenanschluss miteinander verbunden. Die andere Seite der Konverterarme ist mit der Gleichspannungsseite verbunden. Die Wechselspannungsseite des modularen Multilevel-Stromrichters wird durch einen oder mehrere Phasenanschlüsse gebildet. Im grundlegenden Aufbau kann mit dem Konverter Energie zwischen der Gleichspannungsseite und der Wechselspannungsseite bidirektional übertragen oder in einem gewissen Maß zwischengespeichert werden.

Um zusätzlich einen gezielten Energieabbau zu ermöglichen, ist die Installation eines Bremsstellers zweckmäßig. Ein modularer Bremssteller ist aus der WO 2007/023061 A2 bekannt. Der modulare Bremssteller wird üblicherweise an die Gleichspannungsseite des modularen Multilevel-Stromrichters beispielsweise zwischen einem DC+ und einem DC- Anschluss angeschlossen.

Der Widerstand einer Bremsstelleranordnung wird oftmals auch als Bremswiderstand bezeichnet, da dieser dazu geeignet ist, elektrische Energie einer elektrischen Maschine, die aufgrund eines Bremsvorgangs erzeugt wird, in Wärme umzuwandeln. Dabei ist die Verwendung eines Bremsstellers nicht auf die Anwendung eines bremsenden elektrischen Antriebs beschränkt. So muss es sich nicht notwendigerweise um Bremsenergie handeln, die in Wärme umgewandelt wird. Der Bremssteller kann beispielsweise auch zur Stabilisierung eines Energieversorgungsnetzes eingesetzt werden, indem er elektrische Energie aus dem Energieversorgungsnetz in Wärme umwandelt. Der Begriff Bremswiderstand wurde gewählt, um den Widerstand, in dem eine vorgegebene elektrische Energie bzw. Leistung in Wärme bzw. Wärme pro Zeit umgesetzt wird, von anderen Widerständen unterscheiden zu können.

Mit der Bezeichnung, eine in Wärme umzusetzende Leistung ist im Folgenden gemeint, dass das Integral der Leistung über die Zeit in Wärme umgesetzt wird. Mit anderen Worten wird eine sich aus der Leistung über die Zeit ergebende Energiemenge in Wärme umgesetzt.

Der Erfindung liegt die Aufgabe zugrunde, einen modularen Bremssteller zu verbessern.

Diese Aufgabe wird durch ein Verfahren zum Betreiben eines modularen Bremsstellers gelöst, wobei der modulare Bremssteller mindestens ein Submodul und einen Bremswiderstand umfasst, die in einer Reihenschaltung angeordnet sind, wobei zumindest zeitweise mittels des mindestens einen Submoduls eine Spannung erzeugt wird, wobei die erzeugte Spannung einen Gleichanteil und einen alternierenden Anteil aufweist, wobei der alternierende Anteil gleichanteilsfrei und derart bemessen ist, dass die im zeitlichen Mittel vom modularen Bremssteller aufgenommene elektrische Energie im Bremswiderstand in Wärme umgesetzt wird, wobei eine Modulationsfrequenz des alternierende Anteils in Abhängigkeit von einem Teillastfaktor des modularen Bremsstellers variiert wird. Weiter wird diese Aufgabe durch eine Steuereinrichtung, eingerichtet zur Durchführung eines derartigen Verfahrens gelöst. Diese Aufgabe wird ferner durch einen modularen Bremssteller gelöst, wobei der modulare Bremssteller mindestens ein Submodul und einen Bremswiderstand umfasst, die in einer Reihenschaltung angeordnet sind, wobei mittels des mindestens einen Submoduls eine Spannung erzeugbar ist, wobei zur Steuerung oder Regelung des mindestens einen Submoduls der modulare Bremssteller eine derartige Steuereinrichtung aufweist. Diese Aufgabe wird weiter durch eine modulare Antriebseinheit gelöst, die einen modularen Multilevel-Stromrichter und einen derartigen modularen Bremssteller aufweist, wobei der modulare Bremssteller mit einer Gleichspannungsseite des modularen Multilevel-Stromrichters elektrisch verbunden ist.

Weitere vorteilhafte Ausgestaltungen der Erfindung sind in den abhängigen Ansprüchen angegeben.

Der Erfindung liegt unter anderem die Erkenntnis zugrunde, dass sich durch den modularen Aufbau des modularen Bremsstellers jede Betriebsspannung des Bremsstellers realisieren lässt. Üblicherweise wird der modulare Bremssteller mit dem Zwischenkreis eines Stromrichters verbunden, um elektrische Energie aus einem Antriebssystem oder einem Energieversorgungssystem in Wärme umwandeln zu können. Mit dem modularen Aufbau lässt sich der modulare Bremssteller durch Verwendung einer entsprechenden Anzahl an Submodulen an beliebig hohe Zwischen- kreisspannungen anpassen.

Der Teillastfaktor $\alpha$ beschreibt dabei den Anteil der vom modularen Bremssteller aufgenommenen Wirkleistung in Bezug auf seine Nennleistung, bei dem der maximale Strom durch den Bremswiderstand fließt. Dies wird durch den Zusammenhang

$$\alpha = \frac{i_{BR,DC}}{i_{BR,DC,max}}$$

ausgedrückt. Mit anderen Worten gibt der Teillastfaktor an, welchen Anteil an der maximalen Leistung der modulare Bremssteller 1 im vorliegenden Betriebspunkt in Wärme umwandelt.

Die Modulationsfrequenz ist die Frequenz des alternierenden Anteils.

Als Submodule können dabei alle bereits bekannten Typen von Submodulen verwendet werden. Dazu zählen beispielsweise Halbbrückenmodule, Doppelhalbbrückenmodule oder auch Vollbrückenmodule. Zur Erzeugung von Spannungen kann allein die Kondensatorspannung oder die Kondensatorspannungen des entsprechenden Submoduls genutzt werden. Alternativ ist es auch möglich, beispielsweise durch Verwendung einer Pulsweitenmodulation auch eine Spannung durch das Submodul zu erzeugen, die kleiner ist als die Kondensatorspannung bzw. Kondensatorspannungen. Insbesondere bei der Verwendung nur eines Submoduls hat sich die Pulsweitenmodulation als vorteilhaft erwiesen, um unterschiedliche Spannungen zu erzeugen.

Darüber hinaus ermöglicht das Verfahren zum Betreiben des modularen Bremsstellers, die in Wärme umzuwandelnde Leistung genau zu steuern oder zu regeln. Die Wärme ergibt sich dann aus dem zeitlichen Integral der Leistung. Das Verfahren sieht vor, dass nicht die gesamte Zwischenkreisspannung bei der Energieumwandlung am Bremswiderstand abfällt. Der Vorteil liegt darin, die in Wärme umzuwandelnde Leistung regeln zu können. Gleichzeitig wird der Energieinhalt des Kondensators oder der Kondensatoren des mindestens einen Submoduls oder der Submodule geregelt. Damit ist ein stabiler Betrieb des modularen Bremsstellers auch über längere Betriebsdauern, insbesondere für einen kontinuierlichen Betrieb, möglich.

Der Bremswiderstand kann an beliebiger Stelle in der Reihenschaltung angeordnet sein. Beispielsweise kann der Bremswiderstand zwischen einem der Anschlüsse des modularen Bremsstellers und einem Submodul oder an beliebiger Stelle zwischen zwei Submodulen angeordnet sein.

Für den Fall, dass der modulare Bremssteller nicht aktiv ist, also keine elektrische Energie in Wärme umsetzen soll, ist die über dem mindestens einen Submodul oder der weiteren Reihenschaltung von Submodulen anliegende Spannung identisch der Zwischenkreisspannung, so dass über dem Widerstand keine Spannung abfällt und damit auch kein Strom fließt.

Für die Steuerung oder Regelung wird eine Spannung über dem mindestens einen Submodul oder, falls mehrere Submodule in einer weiteren Reihenschaltung angeordnet sind, über der weiteren Reihenschaltung der Submodule erzeugt. Für die Steuerung oder Regelung der in Wärme umzuwandelnden Leistung wird hierfür ein Gleichanteil der Spannung vorgesehen. Für die Regelung der Kondensatorspannung oder der Kondensatorspannungen des oder der Submodule wird ein alternierender Anteil dem Gleichanteil überlagert.

Da diese Spannungen entsprechende Ströme bewirken, hat es sich als vorteilhaft erwiesen, die Änderungsgeschwindigkeit der Spannungsänderung zu beschränken. Durch den mit den Spannungsänderungen einhergehenden Strömen eignet sich der modulare Bremssteller dann auch für Bremssteller, die eine Induktivität, beispielsweise als parasitäre Induktivität des Bremswiderstands aufweisen.

Besonders vorteilhaft ist es, den modularen Bremssteller mit dem modularen Multilevel-Stromrichter, auch als M2C Stromrichter bezeichnet, zu einer modularen Antriebseinheit zu kombinieren. Dabei können für den modularen Multilevel-Stromrichter als auch für den modularen Bremssteller baugleiche Submodule zum Einsatz kommen. Ebenso kann die gleiche Hardware für die Steuerung der Submodule verwendet werden. Durch den modularen Aufbau, sowohl von Stromrichter als auch vom modularen Bremssteller kann die modulare Antriebseinheit einfach an eine geforderte Leistungsanforderung durch die Wahl einer entsprechenden Anzahl von Submodulen im Stromrichter und im modularen Bremssteller angepasst werden. Durch die baugleiche Ausführung der Submodule in modularem Bremssteller und Multilevel-Stromrichter kann ein hoher Anteil an Gleichteilen erzielt werden. Dies wirkt sich positiv auf die Zuverlässigkeit und die Herstellkosten einer derartigen Antriebseinheit aus.

Der modulare Bremssteller kann an die Gleichspannungsseite von Stromrichtern mit beliebigem Aufbau angeschlossen werden und ist nicht auf die Anwendung mit einem modularen Multilevel-Stromrichter beschränkt.

Mit dem Gleichanteil der Spannung kann ein Strom durch den modularen Bremssteller erzeugt werden, der auch einen weiteren Gleichanteil aufweist. Dieser Gleichanteil fließt durch den modularen Bremssteller und somit auch den Bremswiderstand. Dabei erzeugt der durch den Bremswiderstand fließende Strom elektrische Verluste. Diese werden genutzt, um gezielt elektrische Energie in Wärme umzuwandeln. Die Höhe der in Wärme umzusetzenden Leistung, also Energie pro Zeiteinheit, kann durch die Höhe des Gleichanteils der Spannung gesteuert oder geregelt werden, da sich damit direkt die über dem Widerstand abfallende Spannung und daraus wiederum der weitere Gleichanteil des Stroms durch den modularen Bremssteller ergibt.

Die Zwischenkreisspannung liegt über dem modularen Bremssteller an, da dieser mit dem Zwischenkreis elektrisch verbunden ist. Damit liegt die Zwischenkreisspannung über der Reihenschaltung aus Bremswiderstand und der weiteren Reihenschaltung der Submodule an. Anstelle der weiteren Reihenschaltung von Submodulen kann alternativ auch nur ein Submodul vorhanden sein. Somit nimmt der modulare Bremssteller, an dem die Zwischenkreisspannung anliegt, die Wirkleistung

$$P_{BR} = U_D \cdot i_{BR,DC}$$

auf. Die gesamte vom Bremswiderstand aufgenommene Wirkleistung soll in Wärme umgesetzt werden, da der modulare Bremssteller nicht zur Aufnahme und Speicherung nennenswerter Energiebeträge ausgestaltet sein soll.

Der alternierende Anteil ist derart bemessen, dass die im zeitlichen Mittel vom modularen Bremssteller aufgenommene elektrische Energie im Bremswiderstand in Wärme umgesetzt wird. Der alternierende Anteil kann dazu genutzt werden, die Kondensatorspannungen der Submodule zu beeinflussen und den modularen Bremssteller zu stabilisieren. Der alternierende Anteil der Spannung bewirkt mittels eines entsprechenden Spannungsabfalls über dem Bremswiderstand einen weiteren alternierenden Anteil im Strom durch den modularen Bremssteller. Dabei hat sowohl der alternierende Anteil als auch der weitere alternierende Anteil einen Mittelwert von null, so dass mit dem weiteren alternierenden Anteil des Stroms und der Zwischenkreisspannung bzw. der Spannung über dem modularen Bremssteller nur Blindleistung ausgetauscht wird. Der alternierende Anteil ist damit gleichanteilsfrei. Es hat sich in vorteilhafter Weise gezeigt, dass dieser Anteil dazu genutzt werden kann, Energie zwischen den Kondensatoren der Submodule und dem Widerstand auszutauschen. Dabei wird der Energieaustausch in vorteilhafter Weise so gesteuert oder geregelt, dass die gesamte Wirkleistung über dem Widerstand in Wärme umgesetzt wird. Dabei wird die im zeitlichen Mittel vom modularen Bremssteller aufgenommene elektrische Energie im Bremswiderstand in Wärme umgesetzt. Als Gleichung formuliert ergibt sich dabei der Zusammenhang

$$P_{BR} = U_D \cdot i_{BR,DC} = R \cdot i_{BR,eff}^2 \qquad ,$$

wobei der Strom $i_{BR}$ durch den Bremswiderstand sich aus dem Gleichanteil $i_{BR,DC}$ und dem alternierenden Anteil $i_{BR,aDC}$ gemäß

$$i_{BR} = i_{BR,DC} + i_{BR,aDC}$$

zusammensetzt. Daraus kann abhängig von der Spannungsform, die den Effektivwert beeinflusst, der alternierende Anteil bestimmt werden.

Es hat sich gezeigt, dass die Energiependelung abhängig sind vom Teillastfaktor. Diese sind oftmals im Bereich von $\alpha = 0{,}3$ am größten. Dabei handelt es sich um eine Energie, die in dem Kondensator des Submoduls gespeichert und wieder abgegeben wird. Weiter hat sich gezeigt, dass sich das Maß der Energiependelung, d.h. die Energieschwankung am Kondensator der Submodule dadurch verringern lässt, dass die Modulationsfrequenz erhöht wird. Somit ist es vorteilhaft, die Modulationsfrequenz in Abhängigkeit vom Teillastfaktor zu variieren oder festzulegen. Dadurch kann die Kapazität der Kondensatoren der Submodule verringert werden und sowohl die Submodule als auch der modulare Bremssteller lassen sich kostengünstiger herstellen.

Das vorgeschlagene Verfahren sieht eine variable Modulationsfrequenz in Abhängigkeit des Betriebspunktes vor. Bei Betriebspunkten mit höherem relativen Energierippel oder Energiependelung wird die Modulationsfrequenz $f_M$ erhöht, um die Spannungsschwankung in den Submodulkondensatoren zu reduzieren. Dadurch steigen die Verluste in den eingesetzten Halbleitern. Da sich die Betriebspunkte jedoch im Teillastbereich befinden, sind die Halbleiter in diesen Punkten nicht an ihrer Betriebsgrenze und müssen daher nicht für höhere Leistungen ausgelegt werden. Die Effizienz ist hierbei ebenfalls nicht entscheidend, da der Betrieb des modularen Bremsstellers stets eine gezielte Leistungsumsetzung bzw. Abfuhr von Energie vorsieht.

Die betriebspunktabhängige Änderung der Modulationsfrequenz kann durch eine Vielzahl von Varianten realisiert werden. Hierbei ist sowohl eine Steuerung als auch eine aktive Regelung der Modulationsfrequenz möglich. Die Abhängigkeit des Betriebspunktes kann beispielsweise über den Aussteuergrad oder den Teillastfaktor des modularen Bremsstellers vorgegeben oder mit Hilfe des Stroms durch den modularen Bremssteller oder der Leistung des modularen Bremsstellers erfasst werden. Die Steuerung der Modulationsfrequenz kann wiederum über vorgegebene Kurven, Gleichungen, Grenzwerte oder Lookup-Tables erfolgen, um beispielhaft einige Varianten zu nennen. Dadurch kann ein gewünschtes Systemverhalten erreicht werden, wodurch die Auslastung zwischen den eingesetzten Halbleitern und Kondensatoren beeinflusst werden kann. Dadurch lässt sich im kritischen Teillastbereich die Auslastung der Kondensatoren reduzieren und die der Halbleiter erhöhen. In diesem Bereich wirken die Kondensatoren begrenzend. Bei Betriebspunkte mit höherer Bremsleistung wird die Auslastung wiederum von den Halbleitern auf die Kondensatoren verlagert. In diesen Bereichen wirken die Halbleiter limitierend. Dadurch lässt sich die zu installierende Kondensatorenergie erheblich reduzieren und die installierte Hardware des modularen Bremsstellers deutlich besser ausnutzen.

Das vorgeschlagene Verfahren sieht hierbei eine betriebspunktabhängige Anpassung der Modulationsfrequenz vor, wodurch die Auslastung bzw. Ausnutzung der verschiedenen Hardware-Komponenten des modularen Bremsstellers betriebspunktabhängig verschoben werden kann. Dadurch lässt sich die zu installierende Kondensatorenergie erheblich reduzieren und die installierte Hardware des modularen Bremsstellers teilweise sogar deutlich besser ausnutzen. Die betriebspunktabhängige Steuerung oder Regelung der Modulationsfrequenz kann dabei auf unterschiedlichste Art und Weise erfolgen.

Bei einer vorteilhaften Ausgestaltung der Erfindung umfasst der modulare Bremssteller eine Vielzahl von Submodulen, die in einer weiteren Reihenschaltung angeordnet sind, wobei mittels der Vielzahl von Submodulen die erzeugte Spannung über der weiteren Reihenschaltung der Submodule anliegt. Durch die Verwendung einer Vielzahl von Submodulen in der weiteren Reihenschaltung kann die Betriebsspannung des modularen Bremsstellers beliebig an die Zwischenkreisspannung des Stromrichters angepasst werden. Dabei sind beliebig hohe Betriebsspannungen, also Zwischenkreisspannungen in der Antriebseinheit, realisierbar.

Bei einer weiteren vorteilhaften Ausgestaltung der Erfindung wird der Gleichanteil in Abhängigkeit von der mittels des modularen Bremsstellers in Wärme umzuwandelnden Leistung oder in Abhängigkeit von der über der am modularen Bremssteller anliegenden Spannung gesteuert oder geregelt wird. Dabei wird die in Wärme umzuwandelnden Leistung oder die am modularen Bremssteller anliegenden Spannung mittels eines Sollwertes vorgegeben. Durch Vergleich des Sollwertes mit dem Istwert kann auf einfache Weise eine Regelung, beispielsweise mittels eines PI-Reglers durchgeführt werden. Somit hat es sich als vorteilhaft erwiesen, den Gleichanteil in Abhängigkeit von der in Wärme umzuwandelnden Leistung zu steuern oder zu regeln. Dabei kann diese Leistung wieder von anderen Größen abhängen wie beispielsweise der Spannung des Kondensators der Submodule eines modularen Multilevel-Stromrichters. Falls der modulare Bremssteller an einem Zwischenkreis mit Zwischenkreiskondensator betrieben wird, beispielsweise an einem 2-Punkt- oder 3-Punkt-Strom-richter, hat es sich als vorteilhaft erwiesen, den Gleichanteil in Abhängigkeit von der Zwischenkreisspannung zu steuern oder zu regeln. Mit diesen Regelungsstrukturen lassen sich dynamische Regelungen zur Umwandlung von elektrischer Leistung in Wärme realisieren, die die elektrische Antriebseinheit vor Überlastung durch zu hohe Energiemengen schützen. Diese Energiemengen können sich beispielsweise aus dem Bremsvorgang einer elektrischen Maschine ergeben.

Bei einer weiteren vorteilhaften Ausgestaltung der Erfindung wird der Gleichanteil derart gesteuert oder geregelt, einen Strom mit einem weiteren Gleichanteil durch den modularen Bremssteller zu erzeugen, wobei das Produkt aus dem weiteren Gleichanteil und der Spannung über dem modularen Bremssteller einer vorgegebenen, durch den modularen Bremssteller in Wärme umzuwandelnden Leistung, insbesondere einer vorgegebenen, durch den modularen Bremssteller in Wärme umzuwandelnden Wirkleistung, entspricht. Der Gleichanteil der Spannung wird dabei in der Spannungshöhe so gesteuert oder geregelt, dass der weitere Gleichanteil des Stroms so groß ist, dass das Produkt aus der Zwischenkreisspannung und dem weiteren Gleichanteil dem Wert, der durch den modularen Bremssteller in Wärme umzuwandelnden Leistung entspricht. Bei der in Wärme umzuwandelnden Leistung handelt es sich um eine Energie, die in einer bestimmten Zeit in Wärme umgewandelt wird. Alternativ ist es möglich, auch eine Wirkleistung als in Wärme umzuwandelnden Leistung festzulegen.

Bei einer weiteren vorteilhaften Ausgestaltung der Erfindung ist die Modulationsfrequenz des alternierende Anteils bei einem Teillastfaktor im Bereich von 0,2 bis 0,4 größer als bei einem Teillastfaktor im Bereich größer als 0,8. Es hat sich gezeigt, dass gerade im Bereich um 0,3 des Teillastfaktors der modulare Bremssteller eine hohe Energiependelung aufweist. Gleichzeitig sind die fließenden Ströme aufgrund des geringen Teillastfaktors gering. Dies erlaubt, die Modulationsfrequenz zu erhöhen. Die höhere Schaltfrequenz der Halbleiter der Submodule ist aufgrund des relativ geringen Stroms möglich. Bei weiter ansteigendem Teillastfaktor über den Wert von 0,8 hinaus sind die Ströme dann derart groß, dass die Halbleiter mit geringerer Frequenz schalten und eine geringere Modulationsfrequenz gewählt wird. Dies hat den Vorteil, dass die Leistungsfähigkeit der vorhandenen Halbleiter besser ausgenutzt wird und dadurch sich die Kapazität der Kondensatoren der Submodule senken lassen.

Bei einer weiteren vorteilhaften Ausgestaltung der Erfindung wird der alternierende Anteil als Stellgröße einer Regelung der Kondensatorspannungen der Submodule verwendet. Um Störungen ausregeln zu können, hat es sich als positiv erwiesen, die nach den Formeln ermittelten Werte des alternierenden Anteils für eine Vorsteuerung zu verwenden. Die Spannung an den Kondensatoren wird dann mittels einer Regelung geregelt. Damit kann der modulare Bremssteller auch bei Vorliegen von Störgrößen stabil betrieben werden. Des Weiteren ist der Betrieb unabhängig von sich ändernden Größen. Beispielsweise eine durch Alterung oder Erwärmung hervorgerufene Änderung des Widerstandswertes kann durch die Regelung problemlos ausgeglichen werden.

Bei einer weiteren vorteilhaften Ausgestaltung der Erfindung ist eine Wechselspannungsseite des modularen Multilevel-Stromrichters mit einer Energiequelle, insbesondere mit einem Energieversorgungsnetz oder mit einer elektrischen Maschine, verbunden. Der modulare Bremssteller kann durch die Verbindung mit einer Energiequelle dazu genutzt werden, überschüssige oder nicht nutzbare Energie in Wärme umzuwandeln. Bei der Energiequelle kann es sich beispielsweise um eine elektrische Maschine handeln, die bei einem Abbremsvorgang elektrische Energie zurückspeist. Wenn diese nicht weiter genutzt werden kann, muss diese mittels des modularen Bremsstellers in Wärme umgewandelt werden, wenn auf eine mechanische Bremse verzichtet werden soll. Die Umwandlung der elektrischen Energie in Wärme erfolgt im Gegensatz zu einer mechanischen Bremse verschleißfrei, so dass der Einsatz des modularen Bremsstellers im Betrieb wirtschaftlicher ist.

Ebenso ist es möglich, den modularen Multilevel-Stromrichter für die Energieübertragung zu nutzen. In diesem Fall kann es sinnvoll sein, für den Fall, dass die übertragene Energie nicht abgenommen werden kann, einen modularen Bremssteller vorzusehen. Dieser gewährleistet, dass eine derartige Energieübertragung auch dann im Betrieb bleibt, wenn die Entgegennahme von Energie gestört ist. Das Energieübertragungssystem kann während dieser Störung im Betrieb bleiben und ein aufwendiges neues Abschalten und Anfahren, das auch zu Stabilitätsproblemen im Energieversorgungsnetz führen kann, zuverlässig vermeiden. Somit steigert der modulare Bremssteller auch die Zuverlässigkeit und Verfügbarkeit einer modularen Antriebseinheit, die für die Energieübertragung vorgesehen ist.

Bei einer weiteren vorteilhaften Ausgestaltung der Erfindung ist die Steuereinrichtung der modularen Antriebseinheit dazu eingerichtet, die in Wärme umzuwandelnde Leistung in Abhängigkeit von der Spannung des Kondensators der Submodule des modularen Multilevel-Stromrichters zu ermitteln. Bei einem modularen Multilevel-Stromrichter zeigt sich eine im Stromrichter gespeicherte Energie nicht zwangsweise wie beispielsweise bei einem 2-Punkt- oder 3-Punkt-Stromrichter an der Zwischenkreisspannung. Bei dem modularen Multilevel-Stromrichter wirkt sich ein erhöhter Energieinhalt auf die gespeicherte Energie, also die Spannung, des Kondensators oder der Kondensatoren in den jeweiligen Submodulen des modularen Multilevel-Stromrichters aus. Um den Energieinhalt im modularen Multilevel-Stromrichter gezielt zu reduzieren, hat es sich als vorteilhaft erwiesen, die für die Steuerung oder Regelung des Gleichanteils in Wärme umzusetzende Leistung in Abhängigkeit von der Spannung des Kondensators der jeweiligen Submodule des modularen Multilevel-Stromrichters zu ermitteln. Ein mögliches Verfahren zum Betreiben einer elektrischen Antriebseinheit mit einem modularen Stromrichter und einem vorgeschlagenen modularen Bremssteller regelt oder steuert den Gleichanteil der Spannung über der weiteren Reihenschaltung der Submodule des modularen Bremsstellers in Abhängigkeit von der Spannung des Kondensators oder der Kondensatoren der Submodule des modularen Multilevel-Stromrichters.

Im Folgenden wird die Erfindung anhand der in den Figuren dargestellten Ausführungsbeispiele näher beschreiben und erläutert. Es zeigen:

FIG 1 einen modularen Bremssteller,
FIG 2 bis FIG 4 Ausführungsbeispiele für das Submodul,
FIG 5 Zeitverläufe von Spannung und Strom,
FIG 6 Auswirkungen des Steuerverfahrens auf die Energiependelungen und
FIG 7 bis FIG 9 Ausführungsbeispiele der modularen Antriebseinheit.

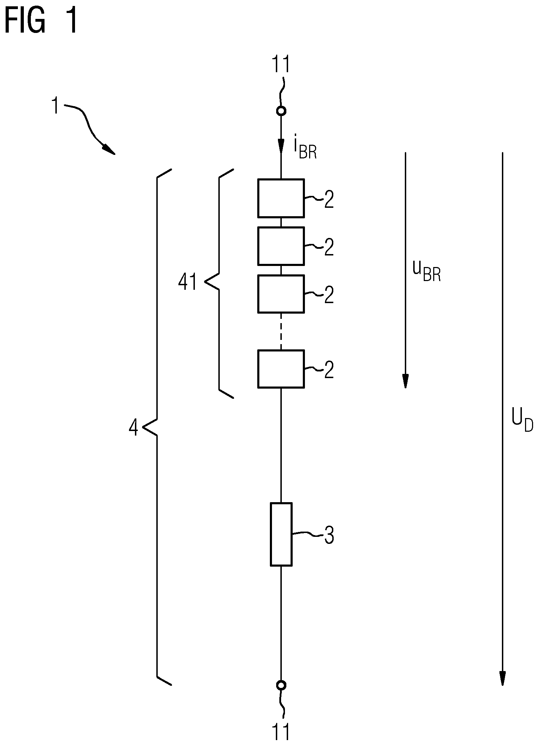

Die FIG 1 zeigt einen modularen Bremssteller 1. Dieser weist eine Reihenschaltung 4 von mindestens einem Submodul 2 und einem Bremswiderstand 3 auf. Die Reihenschaltung 4 kann eine Vielzahl von Submodulen 2 aufweisen. Diese sind wiederum als Teil der Reihenschaltung 4 in einer weiteren Reihenschaltung 41 angeordnet. Der modulare Bremssteller 1 ist dazu eingerichtet, an seinen Anschlüssen 11 mit einem Zwischenkreis 9 eines Stromrichters verbunden zu werden.

Über der weiteren Reihenschaltung 41 der Submodule 2 lässt sich mit Hilfe einer Steuereinrichtung 10 eine Spannung $u_{BR}$ erzeugen. Mit der erzeugten Spannung $u_{BR}$ lässt sich ein Strom $i_{BR}$ durch den modularen Bremssteller 1 bewirken. Der Strom $i_{BR}$ fließt auch durch den Bremswiderstand 3 und bewirkt die Umwandlung von elektrischer Energie in Wärme. Über dem modularen Bremssteller 1 liegt die Betriebsspannung $U_D$ an. Wird der modulare Bremssteller 1 mit dem Zwischenkreis eines Stromrichters verbunden, so liegt an dem modularen Bremssteller die Zwischenkreisspannung an. In diesem Fall spricht man davon, dass der modulare Bremssteller 1 mit der Gleichspannungsseite des Stromrichters verbunden ist.

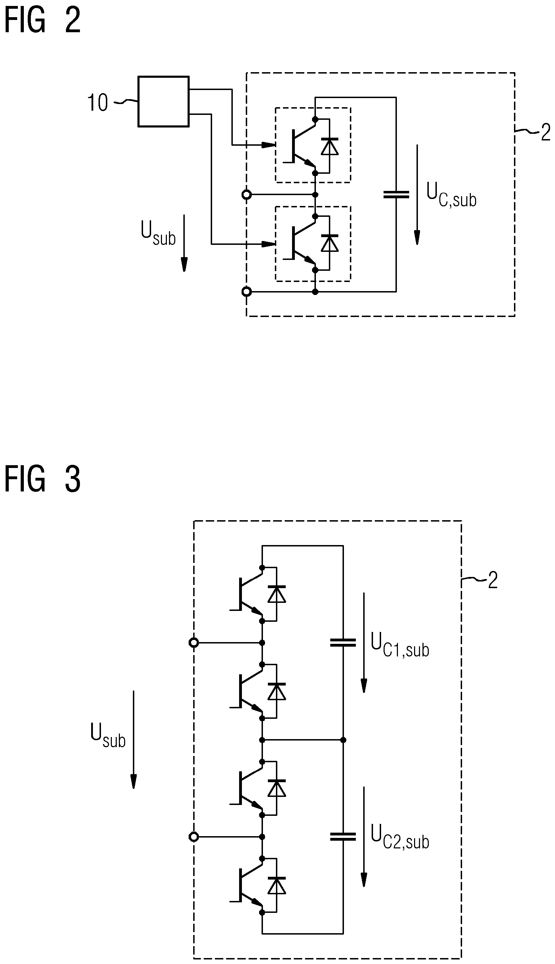

Die Figuren 2 bis 4 zeigen Ausführungsbeispiele von Submodulen 2. Alle bekannten Submodule 2, insbesondere die Submodule 2 der Figuren 2 bis 4 sind für die Durchführung des vorgeschlagenen Verfahrens geeignet. Zur Vermeidung von Wiederholungen wird auf die Beschreibung zur FIG 1 und die dort eingeführten Bezugszeichen verwiesen.

Die dargestellten Ausführungsbeispiele der Submodule 2 umfassen mindestens zwei Halbleiterschalter und mindestens einen Kondensator. Durch Schalthandlungen der Halbleiter-schalter kann eine Ausgangsspannung $U_{sub}$ an den Anschlüssen des Submoduls 2 erzeugt werden. Dabei übermittelt eine Steuereinrichtung 10 die Ansteuersignale an die Halbleiterschalter des Submoduls 2. Die Steuereinrichtung 10 ist vorzugsweise außerhalb des Submoduls 2 angeordnet und somit nicht Teil des Submoduls 2. Vielmehr hat es sich als vorteilhaft erwiesen, mit einer Steuereinrichtung 10 alle Submodule 2 des modularen Bremsstellers 1 anzusteuern. Darüber hinaus kann die Steuereinrichtung 10 die für die Steuerung und Regelung der Spannungen und Ströme erforderlichen Berechnungen vornehmen. So kann die Steuereinrichtung 10 aus dem vorgegebenen Wert der in Wärme umzuwandelnden Leistung den erforderlichen Strom $i_{BR}$ durch den modularen Bremssteller 1 bestimmen. Um diesen Strom $i_{BR}$ zu erzeugen, wird durch entsprechende Ansteuersignale eine durch die Steuereinrichtung 10 ermittelte, gesteuerte oder geregelte Spannung über den Submodulen 2 der weiteren Reihenschaltung 41 erzeugt. In den folgenden Ausführungsbeispielen wurde auf die Darstellung der Steuereinrichtung 10 aus Gründen der Übersichtlichkeit verzichtet.

Die FIG 2 zeigt ein sogenanntes Halbbrückenmodul. Dies weist zwei Halbleiterschalter und einen Kondensator auf. An dem Kondensator liegt die Spannung $U_{C,sub}$ an. Durch Schalthandlungen der Halbleiterschalter kann die Ausgangs-spannung $U_{sub}$ von null oder $U_{C,sub}$ an den Anschlüssen des Submoduls 2 erzeugt werden.

Die FIG 3 zeigt ein sogenanntes Doppelbrückenmodul. Dies weist vier Halbleiterschalter und zwei Kondensatoren auf. An den Kondensatoren liegt jeweils die Spannung $U_{C1,Sub}$ bzw. $U_{C2,sub}$ an. Durch Schalthandlungen der Halbleiterschalter kann die Ausgangsspannung $U_{sub}$ von null, einer der Kondensatorspannungen $U_{C1,sub}$, $U_{C2,sub}$ oder der Summe der Kondensatorspannungen $U_{C1,sub}$, $U_{C2,sub}$ an den Anschlüssen des Submoduls 2 erzeugt werden.

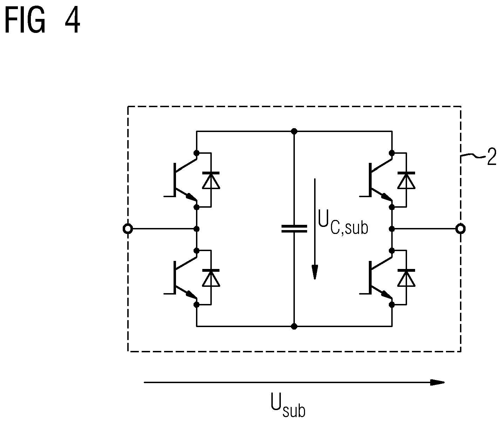

Die FIG 4 zeigt ein sogenanntes Vollbrückenmodul. Dies weist vier Halbleiterschalter und einen Kondensator auf. An dem Kondensator liegt die Spannung $U_{C,sub}$ an. Durch Schalthandlungen der Halbleiterschalter kann die Ausgangsspannung $U_{sub}$ von null, der positiven oder der negativen Kondensatorspannung $\pm U_{C,sub}$ an den Anschlüssen des Submoduls 2 erzeugt werden.

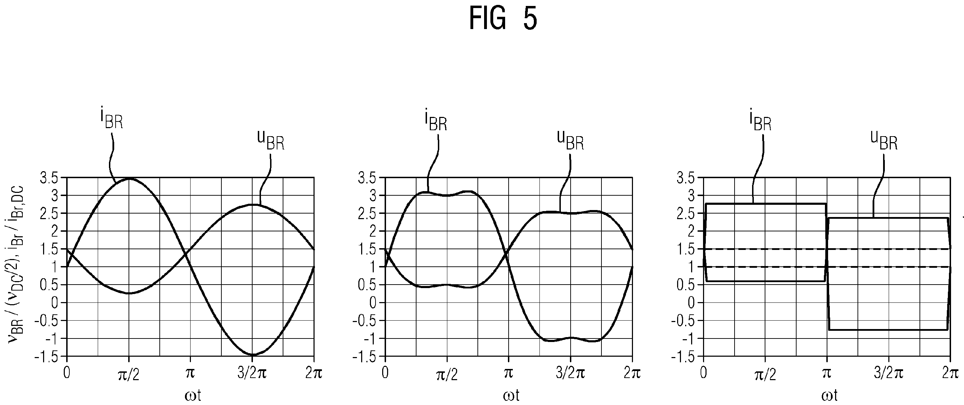

Die FIG 5 zeigt eine Auswahl möglicher Zeitverläufe für die über der weiteren Reihenschaltung erzeugte Spannung $u_{BR}$ und den durch den modularen Bremssteller 1 fließenden Strom $i_{BR}$. Der alternierende Anteil $u_{BR,aDC}$ kann dabei sinusförmig sein. Alternativ kann der alternierende Anteil $u_{BR,aDC}$ auch aus der Überlagerung zweier Sinusfunktionen mit unterschiedlicher Frequenz gewonnen werden. Als weitere Alternative können die Spannungsform und die Stromform des alternierenden Anteils $u_{BR,aDC}$ blockförmig oder trapezförmig ausgebildet sein. Alle diese Ausgestaltungen können zur Steuerung oder Regelung des modularen Bremsstellers genutzt werden.

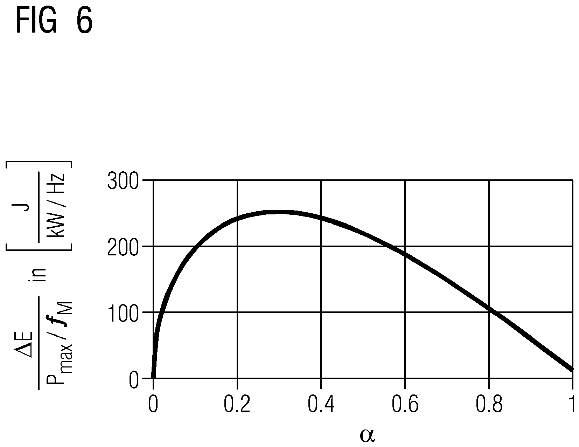

Die FIG 6 zeigt die normierte Energieschwankung $\Delta E$ in Abhängigkeit von dem Teillastfaktor $\alpha$. Bei 0% und 100%, also im Leerlauf und bei Volllast ist die Energiependelung $\Delta E$ am geringsten. Dann wird der größte Teil der Umwandlung in Wärme bereits von dem Gleichanteil bewirkt. Im Bereich von $\alpha = 0{,}3$ ist jedoch die Energiependelung $\Delta E$ am größten. Da diese Größe auch auf die Modulationsfrequenz $f_M$ bezogen ist, kann der absolute Betrag der Energiependelung $\Delta E$ verringert werden, indem die Modulationsfrequenz erhöht wird. Dies ist gerade in dem Bereich um $\alpha = 0{,}3$ möglich, da dort die Durchlassverluste der Halbleiter noch gering sind und der Halbleiter zusätzliche Verluste durch eine erhöhte Schaltfrequenz realisieren kann.

Der Energierippel nimmt im Teillastbereich deutlich zu. Bei sonstigen leistungselektronischen Schaltungen steigt der Energierippel üblicherweise mit der Ausgangsleistung.

Die Energiependelung $\Delta E$ ist ein Maß, welche Energie im Kondensator des Submoduls 2 gespeichert werden muss. Es bestimmt somit die Dimensionierung des Kondensators hinsichtlich seiner Kapazität. Durch die Verringerung der Energiependelung kann der Kondensator in den Submodulen hinsichtlich seiner Kapazität mit geringeren Werten ausgelegt werden. Dadurch wird das Submodul und der gesamte modulare Bremssteller kostengünstiger.

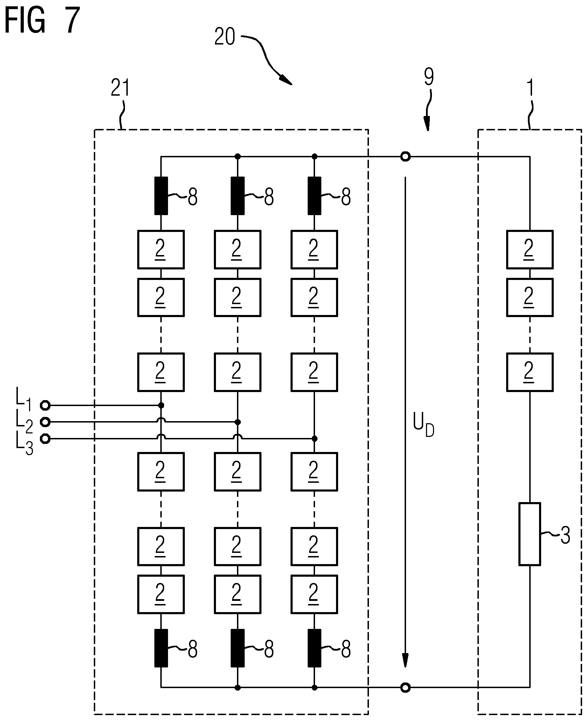

Die FIG 7 zeigt eine modulare Antriebseinheit 20 mit einem modularen Multilevel-Stromrichter 21 und einem modularen Bremssteller 1. Diese sind über den Zwischenkreis 9, an dem die Spannung UD anliegt, miteinander verbunden. Dabei kann, nicht notwendigerweise, der modulare Multilevel-Stromrichter 21 die gleichen Submodule 2 aufweisen wie der modulare Bremssteller 1. Die Reihenschaltung der Submodule 2 des modularen Multilevel-Stromrichters 21 weist darüber hinaus noch eine Induktivität 8 auf, die das Regelverhalten des modularen Multilevel-Stromrichters 21 verbessert. Die Anschlüsse L1, L2, L3 stellen die wechselspannungsseitigen Anschlüsse oder kurz die Wechselspannungsseite des modularen Multilevel-Stromrichters 21 dar. In diesem Ausführungsbeispiel ist der modulare Multilevel-Stromrichter 21 dreiphasig ausgeführt. Alternativ ist auch eine einphasige Ausführung mit Neutralleiter oder auch jede beliebige Phasenanzahl möglich, indem entsprechend viele Phasenmodule im modularen Multilevel-Stromrichter 21 vorgesehen werden.

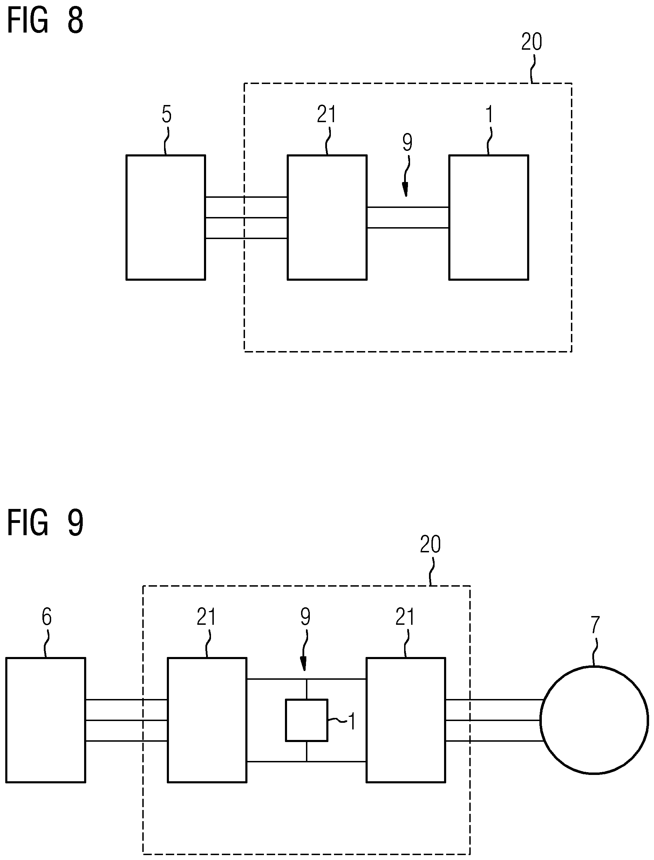

In der FIG 8 ist ein Ausführungsbeispiel einer modularen Antriebseinheit 20 dargestellt. Dabei ist eine Energiequelle 5 mit der Wechselspannungsseite des modularen Multilevel-Stromrichters 21 elektrisch verbunden. Bei der Energiequelle kann es sich beispielsweise um ein Energieversorgungsnetz 6 oder eine elektrische Maschine 7 handeln.

Im Ausführungsbeispiel der FIG 9 weist die modulare Antriebseinheit 20 zwei modulare Multilevel-Stromrichter 21 und einen modularen Bremssteller 1 auf, die am Zwischenkreis 9 miteinander elektrisch verbunden sind. Dabei ist ein erster der zwei modularen Multilevel-Stromrichter 21 an seiner Wechselspannungsseite mit einem Energieversorgungsnetz 6 und ein zweiter der zwei modularen Multilevel-Stromrichter 21 an seiner Wechselspannungsseite mit einer elektrischen Maschine 7 verbunden. Die elektrische Maschine 7 kann dabei aus dem Energieversorgungsnetz 6 mit elektrischer Energie versorgt werden. Auch eine Rückspeisung von Energie von der elektrischen Maschine 7 in das Energieversorgungsnetz 6 beispielsweise bei einem Brems-vorgang ist mit der modularen Antriebseinheit 20 möglich. Falls das Energieversorgungsnetz 6 nicht aufnahmefähig ist, kann die durch die elektrische Maschine 7 gewonnene elektrische Energie mittels des modularen Bremsstellers 1 in vorteilhafter Weise in Wärme umgewandelt werden. Auf eine verschleißbehaftete mechanische Bremse kann in dieser Ausgestaltung verzichtet werden.

**Patentansprüche**

1. Verfahren zum Betreiben eines modularen Bremsstellers (1), wobei der modulare Bremssteller (1) mindestens ein Submodul (2) und einen Bremswiderstand (3) umfasst, die in einer Reihenschaltung (4) angeordnet sind, wobei zumindest zeitweise mittels des mindestens einen Submoduls (2) eine Spannung ($u_{BR}$) erzeugt wird, wobei die erzeugte Spannung ($u_{BR}$) einen Gleichanteil ($u_{BR,DC}$) und einen alternierenden Anteil ($u_{BR,aDc}$) aufweist, wobei der alternierende Anteil ($u_{BR,aDC}$) gleichanteilsfrei und derart bemessen ist, dass die im zeitlichen Mittel vom modularen Bremssteller (1) aufgenommene elektrische Energie im Bremswiderstand (3) in Wärme umgesetzt wird, wobei eine Modulationsfrequenz ($f_M$) des alternierende Anteils ($u_{BR,aDc}$) in Abhängigkeit von einem Teillastfaktor ($\alpha$) des modularen Bremsstellers (1) variiert wird.

2. Verfahren nach Anspruch 1, wobei der modulare Bremssteller (1) eine Vielzahl von Submodulen (2) umfasst, die in einer weiteren Reihenschaltung (41) angeordnet sind, wobei mittels der Vielzahl von Submodulen (2) die erzeugte Spannung ($u_{BR}$) über der weiteren Reihenschaltung (41) der Submodule (2) anliegt.

3. Verfahren nach einem der Ansprüche 1 oder 2, wobei der Gleichanteil ($u_{BR,DC}$) in Abhängigkeit von der mittels des modularen Bremsstellers (1) in Wärme umzuwandelnden Leistung oder in Abhängigkeit von der über der am modularen Bremssteller (1) anliegenden Spannung ($U_D$) gesteuert oder geregelt wird.

4. Verfahren nach Anspruch 3, wobei der Gleichanteil ($u_{BR,DC}$) derart gesteuert oder geregelt wird, einen Strom ($i_{BR}$) mit einem weiteren Gleichanteil ($i_{BR,DC}$) durch den modularen Bremssteller (1) zu erzeugen, wobei das Produkt aus dem weiteren Gleichanteil ($i_{BR,DC}$) und der Spannung ($U_D$) über dem modularen Bremssteller (1) einer vorgegebenen, durch den modularen Bremssteller (1) in Wärme umzuwandelnden Leistung, insbesondere einer vorgegebenen, durch den modularen Bremssteller (1) in Wärme umzuwandelnden Wirkleistung, entspricht.

5. Verfahren nach einem der Ansprüche 3 oder 4, wobei die Modulationsfrequenz ($f_M$) des alternierende Anteils ($u_{BR,aDC}$) bei einem Teillastfaktor ($\alpha$) im Bereich von 0,2 bis 0,4 größer ist als bei einem Teillastfaktor ($\alpha$) im Bereich größer als 0,8.

6. Verfahren nach einem der Ansprüche 1 bis 5, wobei der alternierende Anteil ($u_{BR,aDC}$) als Stellgröße einer Regelung der Kondensatorspannungen ($U_{C,Sub}$) der Submodule (2) verwendet wird.

7. Steuereinrichtung (10), eingerichtet zur Durchführung eines Verfahrens nach einem der Ansprüche 1 bis 6.

8. Modularer Bremssteller (1), wobei der modulare Bremssteller (1) mindestens ein Submodul (2) und einen Bremswiderstand (3) umfasst, die in einer Reihenschaltung (4) angeordnet sind, wobei mittels des mindestens einen Submoduls (1) eine Spannung ($u_{BR}$) erzeugbar ist, wobei zur Steuerung oder Regelung des mindestens einen Submoduls (2) der modulare Bremssteller (1) eine Steuereinrichtung (10) nach Anspruch 7 aufweist.

9. Modularer Bremssteller (1) nach Anspruch 8, wobei der modulare Bremssteller (1) eine Vielzahl von Submodulen (2) umfasst, die in einer weiteren Reihenschaltung (41) angeordnet sind, wobei mittels der Vielzahl von Submodulen (2) eine erzeugte Spannung ($u_{BR}$) über der weiteren Reihenschaltung (41) anliegt.

10. Modulare Antriebseinheit (20), aufweisend einen modularen Multilevel-Stromrichter (21) und einen modularen Bremssteller (1) nach einem der Ansprüche 8 oder 9, wobei der modulare Bremssteller (1) mit einer Gleichspannungsseite des modularen Multilevel-Stromrichters (21) elektrisch verbunden ist.

11. Modulare Antriebseinheit (20) nach Anspruch 10, wobei eine Wechselspannungsseite des modularen Multilevel-Stromrichters (21) mit einer Energiequelle (5), insbesondere mit einem Energieversorgungsnetz (6) oder mit einer elektrischen Maschine (7), verbunden ist.

12. Modulare Antriebseinheit (20) nach einem der Ansprüche 10 oder 11, wobei die Steuereinrichtung (10) eingerichtet ist, die in Wärme umzuwandelnde Leistung in Abhängigkeit von der Spannung des Kondensators der Submodule des modularen Multilevel-Stromrichters (21) zu ermitteln.

FIG 1

FIG 2

FIG 3

# FIG 4

## FIG 5

EP 4 560 911 A1

## FIG 6

FIG 7

FIG 8

FIG 9

Europäisches
Patentamt

European
Patent Office

Office européen
des brevets

# EUROPÄISCHER RECHERCHENBERICHT

Nummer der Anmeldung

EP 23 21 2003

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | LI ZHENGXUAN ET AL: "Energy Diverting Converter Topology Using Unidirectional Current H-Bridge Submodules for VSC-HVDC Transmission System", IEEE TRANSACTIONS ON POWER ELECTRONICS, INSTITUTE OF ELECTRICAL AND ELECTRONICS ENGINEERS, USA, Bd. 37, Nr. 5, 9. Dezember 2021 (2021-12-09), Seiten 5299-5308, XP011898442, ISSN: 0885-8993, DOI: 10.1109/TPEL.2021.3133498 [gefunden am 2022-01-19] * Seite 5302; Abbildungen 1(d), 3-5, 7, 10 * ----- | 1-12 | INV. H02M7/483 H02M1/32 H02M7/757 H02P3/22 H02H9/04 |
| X | BIRKEL ANDRE ET AL: "Analysis and semiconductor based comparison of energy diverting converter topologies for HVDC transmission systems", 2015 17TH EUROPEAN CONFERENCE ON POWER ELECTRONICS AND APPLICATIONS (EPE'15 ECCE-EUROPE), JOINTLY OWNED BY EPE ASSOCIATION AND IEEE PELS, 8. September 2015 (2015-09-08), Seiten 1-10, XP032800044, DOI: 10.1109/EPE.2015.7309087 [gefunden am 2015-10-27] * Seite 3 – Seite 4; Abbildungen 1(c), 1(d) * ----- -/-- | 1-12 | RECHERCHIERTE SACHGEBIETE (IPC) H02M H02H H02P |

Der vorliegende Recherchenbericht wurde für alle Patentansprüche erstellt

| Recherchenort | Abschlußdatum der Recherche | Prüfer |
|---|---|---|
| Den Haag | 26. April 2024 | Zeljkovic, Sandra |

EPO FORM 1503 03.82 (P04C03)

Seite 1 von 2

Europäisches
Patentamt

European
Patent Office

Office européen
des brevets

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | HOFMANN VIKTOR ET AL: "Design and Modulation Optimization of an MMC Based Braking Chopper", 2022 24TH EUROPEAN CONFERENCE ON POWER ELECTRONICS AND APPLICATIONS (EPE'22 ECCE EUROPE), EPE ASSOCIATION, 5. September 2022 (2022-09-05), Seiten 1-11, XP034208108, [gefunden am 2022-10-17] * Seite 1 - Seite 4; Abbildungen 1, 2(b), 3, 4, 10 * ----- | 1-12 | |
| A | HOFSTETTER PATRICK ET AL: "A detailed View on the Trapezoidal Operation for MMC Type Braking Chopper in Medium Voltage Application", 2022 24TH EUROPEAN CONFERENCE ON POWER ELECTRONICS AND APPLICATIONS (EPE'22 ECCE EUROPE), EPE ASSOCIATION, 5. September 2022 (2022-09-05), Seiten 1-8, XP034208838, [gefunden am 2022-10-17] * Seite 1 - Seite 3; Abbildungen 1, 2 * ----- | 1-12 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| **Den Haag** | **26. April 2024** | **Zeljkovic, Sandra** |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.............................................................................
& : Mitglied der gleichen Patentfamilie, übereinstimmendes Dokument

EPO FORM 1503 03.82 (P04C03)

**Seite 2 von 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10103031 A1
- WO 2007023061 A2